# EUROPEAN PATENT APPLICATION

(11) **EP 4 360 874 A1**
(43) Date of publication of application: **01.05.2024**
(21) Application number: 22213577.4
(22) Date of filing: 14.12.2022
(51) Int. Cl.: B32B 27/06, B32B 3/06, B32B 3/30, B32B 5/18, B32B 7/12, B32B 27/08, B32B 27/18, B32B 27/32, B32B 27/36, E04F 15/10

(54) **DECORATIVE PANEL AND METHOD FOR MANUFACTURING SUCH PANEL**

(30) Priority: 25.10.2022 US 202263419179 P; 14.11.2022 US 202263425033 P
(71) Applicant: Unilin, BV, 8710 Wielsbeke (BE)
(72) Inventor: SCHACHT, Benny, 8710 Wielsbeke (BE)
(74) Representative: Unilin Technologies

(57) **Abstract**

Decorative panel comprising at least a substrate (2) and a decorative top layer (3), wherein said substrate (2) is or comprises an extruded board material comprising one or more layers of thermoplastic material and wherein said decorative top layer (3) at least comprises a decorative print (33), characterized in that an outermost layer (31) of said extruded board material is foamed and/or filled with hollow filler materials, and in that an intermediate layer (29) is present intermediate the surface (30) of said outermost layer (31) and said decorative print (33). The invention further is a method ideally suited for manufacturing such decorative panel (1).

## Description

The present invention relates to decorative panels, such as floor panels, and to a method ideally suited for manufacturing such decorative panels.

In particular, the invention relates to decorative panels comprising a substrate and a decorative top layer applied thereon. Such decorative panels, more particularly floor panels, are well-known now and form an alternative for natural floor products, such as solid parquet flooring and natural stone. The decorative top layer may have been printed with a pattern of wood or stone, or may comprise a layer of wood or stone. Examples of such floor panels are known, for example, from WO 97/47834, EP 1 038 689, EP 1 875 011, WO 2017/087725, WO 2011/141849, WO 2018/087637 and WO 2018/087638.

Laminate panels, as known from WO 97/47834, contain a substrate of MDF or HDF (Medium or High Density Fiberboard). Such substrate material cannot cope with prolonged exposure to moisture. In order to remedy this, WO 2017/087725 proposes floor panels comprising a filled thermoplastic substrate. The substrate material of these floor panels is waterproof and is provided with mechanical coupling parts in order to make a smooth floating installation possible. The substrate material has a limited thickness, usually 5 millimeters or less, and is produced with a high density. The high density, usually close to 2000 kg/m³, contributes to the stability of the floor covering. However, a packaging unit containing five panels or more may result in ergonomic problems during handling. Likewise, transportation via the road or in containers is not optimal.

WO 2020/161609 discloses to provide internal spaces or excavations at the bottom of the substrate, in order to make panels with a filled thermoplastic substrate material or a mineral substrate material lighter. Although effective for weight reduction, the use of such internal spaces or excavations may require an altered composition for the thermoplastic substrate material in order to prevent undesirable cupping, warping and telegraphy of the spaces and excavations to become discernible on the decorative top layer. The technique from the WO'609 further requires an adaptation of the delicate extrusion operation. Further, consumers generally do not appreciate spaces or excavations that have the single purpose of making the panels lighter, or less expensive. A connotation of a lack of quality may be linked to such spaces.

WO 2011/141849 proposes the use of a foamed substrate material having denser outer layers, and an additional back layer of a vinyl compound applied to the top side of the substrate. Such floor panel requires additional conversion steps, and the denser outer layers, together with the relatively thick additional back layer may again increase the weight of the floor panel.

The prime object of the present invention is to provide an alternative decorative panel, with various preferred embodiments offering a solution for the problems associated with the prior-art floor panels.

To this end, the invention, according to its first independent aspect is a decorative panel comprising at least a substrate and a decorative top layer, wherein said substrate is or comprises an extruded board material comprising one or more layers of thermoplastic material and wherein said decorative top layer at least comprises a decorative print, with as a characteristic that an outermost layer of said extruded board material is foamed and/or filled with hollow filler materials, and in that an intermediate layer, preferably a bridging layer, is present intermediate the surface of said outermost layer and said decorative print.

Said intermediate layer preferably at least bridges one or more, and preferably all or substantially all, open cells and/or hollow filling materials available at the outer surface of said outermost layer, and thus forms a bridging layer. Alternatively, or in combination, said intermediate layer may enter or even fill one or more, and preferably all or substantially all, open cells and/or hollow filling materials available at the outer surface of said outermost layer.

Preferably, the surface of said intermediate layer that is facing away from said outermost layer extends over one or more, and preferably all, open cells and/or hollow filling materials available at said surface of said outermost layer, preferably in a planar manner, i.e. the surface of said intermediate layer at least at the location of the respective cells and/or filling materials extends in a planar manner. Preferably, said surface is planar over substantially the entire outer surface of said outermost layer, potentially with the exceptions of embossments provided in said decorative layer and extending into said intermediate layer.

It is hence clear that the surface of said intermediate layer that faces away from the substrate may follow the contour of one or more embossments in said decorative top layer, while preferably extending planarly over one or more excavations and/or hollow portions in the surface of said outermost layer of said substrate. It is clear that such hollow portions may be formed by hollow filling materials available at said surface of said outermost layer and/or by closed and/or open cells available directly adjacent to, respectively at said surface of said outermost layer.

As stated above, it is possible that said outermost surface comprises excavations, wherein the surface of said intermediate layer that faces away from said outermost surface is more planar, or is preferably substantially level.

The intermediate layer that is applied in accordance with the invention may provide an enhanced lamination strength of the decorative print, more particularly of a decorative layer comprising said decorative print. Further the intermediate layer may provide for an enhanced production process, as it may provide for a more level surface to provide said decorative print or decorative layer. As the intermediate layer may bridge or fill one or more hollow portions available at or directly adjacent to the surface of said outermost layer, it may provide for an enhanced indentation resistance, and a minimization of squeaking noises originating from breaking cell walls or breaking hollow filling materials. By so doing a serviceable decorative panel, more particularly floor panel, may be obtained on the basis of an extruded substrate material of limited weight.

According to the most preferred embodiment, said decorative print comprises inks provided on a thermoplastic foil, wherein said intermediate layer is present intermediate the surface of said outermost layer and said thermoplastic foil. Preferably, said intermediate layer is directly adjacent to said thermoplastic foil. Alternatively, said intermediate layer is separated from said thermoplastic foil exclusively by means of a glue layer, i.e. a layer forming an adhesive bound between said thermoplastic foil and said intermediate layer.

In said most preferred embodiment, said intermediate layer is preferably based on a thermoplastic material different from the material of said thermoplastic foil and/or the extruded substrate material. Such differences may be one or a combination of two or more of multiple possibilities, of which here below some possible differences are listed.

According to a first possibility, said intermediate layer is based on a thermoplastic material having a lower glass transition temperature than the material of said thermoplastic foil and/or has a glass transition temperature of 50°C or less, preferably of below 23°C, even better below 0°C, without necessarily being different from the material of the thermoplastic foil and/or the extruded substrate material. In such case the intermediate layer can deform at low temperature, even, as the case may be, at lower temperatures than said thermoplastic foil and/or the extruded substrate material, and can be made to at least partially fill or conform to unevenesses in the outer surface of said outermost layer, at the same time, or nearly at the same time, as applying the thermoplastic foil to the panel, for example on top of said intermediate layer by means of at least a pressing operation, for example with one or more lamination rollers.

According to a second possibility, said intermediate layer is based on a semi-crystalline or crystalline thermoplastic material, while said thermoplastic foil and/or said extruded substrate material is based on an amorphous thermoplastic material. A semi-crystalline or crystalline thermoplastic polymer is expected to shrink more than the extruded amorphous thermoplastic material of the substrate, while cooling. Such shrinking may lead to hollow portions in the surface of said outermost layer to become bridged. An intermediate layer based on a semi-crystalline thermoplastic material or crystalline material may comprise a mono-axial or biaxial orientation of the crystal structure. Such orientation preferably at least substantially or exactly coincides with the extrusion direction of said substrate material or the direction transverse to the extrusion direction in order to more fluently control any warping effects.

It is clear that the intermediate layer may at the same time fulfill the abovementioned first possibility and second possibility. Such can for example be the case when the thermoplastic foil and/or the extruded substrate material are based on polyvinylchloride (PVC), preferably unplasticized or with a plasticizer content of 5phr (weight parts by hundred weight parts of the PVC resin) or less, and the intermediate layer is based on polyethylene, polyethylene terephthalate or polypropylene.

Here below some specific and important examples for said intermediate layer are described, without desiring to be exhaustive.

According to a first specific example, said intermediate layer comprises, is based on, and/or is essentially made of polyethylene (PE). PE has a glass transition temperature below 0°C, i.e. about -110°C, and is therefore ideally suitable to be applied in a wide range of extruded substrate materials and decorative top layers. For example, it may conveniently be applied with an extruded substrate material and/or thermoplastic foil comprising polyvinylchloride (PVC), with or without plasticizers, polypropylene (PP), poly lactic acid (PLA), polyethylene terephthalate (PET) or glycol modified polyethylene terephthalate (PETG). An intermediate layer of PE may conveniently be provided as a prefabricated PE foil. The polyethylene may be of the high or low density type (LDPE or HDPE). Low density polyethylene may have a molecular weight between 30,000 and 50,000 g/mol. High density polyethylene may have a molecular weight of 200,000 g/mol or above. It is of course not excluded that a medium density polyethylene (MDPE) would be used, having a density from 50,000 g/mol to 200,000 g/mol. HDPE can be relatively sturdy and thereby able to bridge hollow portions of the outermost layer, while LDPE can be relatively soft and thereby able to fill such hollow portions. MDPE is able to provide a midway effect. Thanks to its sturdiness and strength, HDPE and MDPE may serve to provide an intermediate layer of low thickness, for example of a thickness lower than 100 micrometer, or even of 60 micrometer or lower, while still being able to offer the desired bridging effects.

According to a second specific example, said intermediate layer comprises, is based on, and/or is essentially made of a homo-or heteropolymer of polypropylene (PP). PP has a glass transition temperature below 0°C, i.e. about -10°C for the homopolymer, or lower in case of certain heteropolymers like PE-PP copolymer. The PP hetero- or homopolymer may be oriented, preferably in the extrusion direction of the substrate material. The relatively low glass transition temperature makes such intermediate layer ideally suitable to be applied in a range of technically interesting extruded substrate materials and decorative top layers. For example, it may conveniently be applied with an extruded substrate material and/or thermoplastic foil comprising polyvinylchloride (PVC), with or without plasticizers, poly lactic acid (PLA), polyethylene terephthalate (PET) or glycol modified polyethylene terephthalate (PETG).

According to a third specific example, said intermediate layer comprises, is based on, and/or is essentially made of poly lactic acid (PLA). PLA has a glass transition temperature of about 50°C, and can still be used in combination with such thermoplastic foils and/or extruded substrate materials that are based on, or comprise, polyvinylchloride (PVC), without plasticizers or with a plasticizer content of 5phr or less, polyethylene terephthalate (PET) or glycol modified polyethylene terephthalate (PETG).

According to a fourth specific example, said intermediate layer comprises, is based on, and/or is essentially made of a modified polyethylene terephthalate. Modification of polyethylene terephthalate may lead to a copolyester with a glass transition temperature, or even melt temperature, tailored for its application. For example, the modified polyethylene terephthalate may have a glass transition temperature of 0°C or below. Modified polyethylene terephthalate may therefore be ideally suitable to be applied in a wide range of extruded substrate materials and decorative top layers. For example, it may conveniently be applied with an extruded substrate material and/or thermoplastic foil comprising polyvinylchloride (PVC), with or without plasticizers, polypropylene (PP), poly lactic acid (PLA), polyethylene terephthalate (PET) or glycol modified polyethylene terephthalate (PETG).

Preferably, said intermediate layer is applied as a prefabricated sheet material, for example based on one of the thermoplastic materials as mentioned in the above possibilities or specific examples. For example, the intermediate layer may be a applied as a prefabricated sheet of polyethylene. Preferably said intermediate layer is a single layer, namely preferably provided as a single layered prefabricated sheet material of the respective thermoplastic material. Alternatively said intermediate layer may be multilayered. For example said intermediate layer may be a multilayered prefabricated sheet material. According to a special embodiment, said intermediate layer is a multilayered layer, whether or not formed by a multilayered prefabricated sheet material, wherein at least two of the layers comprised therein are based on mutually different thermoplastic materials. Preferably, the difference between said mutually different thermoplastic materials comprises at least a difference in glass transition temperature, for example of at least 10°C, or at least 25°C or at least a difference in crystallinity, for example of at least 15%. For example one layer may be based on an amorphous thermoplastic material, while another layer may be based on a semi-crystalline material with a crystallinity of 15% or more. According to another special embodiment, which may or may not show the characteristics of the above special embodiment, said multilayered layer comprises at least three layers, wherein the central layer is based on a different thermoplastic material than the two outer layers, which preferably have a same composition. Preferably the glass transition temperature and/or the melt temperature of the outer layers is lower than the glass transition temperature and/or, respectively, the melt temperature of the central layer. In such case a sturdy intermediate layer can be obtained that, by means of the outer layer, may lead to a good delamination resistance. The sturdy intermediate layer may serve as a carrier to introduce the material of the outer layers, which in itself may be less sturdy, into the panel composition. As a specific example of an intermediate multilayered layer, a combination of at least an HDPE layer and a LDPE layer may be used, or a combination of at least a coPET and a PET layer may be used.

Instead of said decorative print being comprised of inks provided on a thermoplastic foil, said decorative print may comprise inks provided on one or more liquidly applied primer layers, wherein said intermediate layer is preferably present intermediate the surface of said outermost layer and said liquidly applied primer layers. Preferably, said intermediate layer is directly adjacent to the lowermost of said liquidly applied primer layers.

Preferably, the decorative panel, more particularly the decorative top layer, further comprises a wear layer applied on top of said decorative print.

In the cases where the decorative print is comprised of inks provided on a thermoplastic foil, the wear layer may comprise a transparent foil of a same or similar thermoplastic material. For example, in the cases where the inks are applied on a thermoplastic foil based on PVC, PP, PET or PE, the transparent foil is preferably based on respectively PVC, PP, PET or PE as well. The thermoplastic material of the transparent foil may however be different in that it comprises less or more types of additives, or a differing amount of additives, such as plasticizers or elastomers. The inks may for example be comprised on a PVC foil having a plasticizer content of 5 phr or less, while the transparent foil is a PVC foil having a plasticizer content of 10 phr or more. Alternatively, in the cases where the decorative print is comprised of inks provided on a thermoplastic foil, the wear layer may comprise a casted or liquidly applied thermoplastic material, that is preferably the same or similar. A transparent foil or liquidly applied thermoplastic layer may further be finished with a superficial lacquer coating, that is preferably UV and/or excimer cured. The superficial lacquer may, for example, be acrylic based or polyurethane based.

In the cases where said decorative print comprises inks provided on one or more liquidly applied primer layers, the wear layer may comprise one or more liquidly applied lacquer layers, such as acrylic based lacquer layers, that are preferably UV cured.

Preferably, said intermediate layer is directly adjacent to said surface of said outermost layer, or, alternatively, said intermediate layer is separated from said surface of said outermost layer exclusively by means of a glue layer, i.e. a layer forming an adhesive bound between said outermost layer and said intermediate layer.

It is clear that in the case of multilayered intermediate layers, one or more of the outermost layers may form said glue layer, in which case, it is the other layer, or the central layer, as the case may be, that is separated from the surface of said outermost layer of the substrate, or from the thermoplastic foil, by means of the material of the respective outermost layer of the multilayered intermediate layer.

From the above, it is clear that said intermediate layer is preferably a thermoplastic foil, for example a PE (polyethylene), PET (polyethylene terephthalate), COPET (copolymer of PET) or a PETG (polyethylene terephthalate glycol) film. According to another example, said intermediate layer is a PP (polypropylene) film or a film based on a copolymer of PP and PE.

Preferably, as already illustrated above, said intermediate layer is based on a thermoplastic material different from the thermoplastic material of said substrate. Preferably, said extruded board material consists of a single layer of a first thermoplastic material and said decorative top layer comprises a decorative print provided on a film of said first thermoplastic material, wherein said intermediate layer comprises a second thermoplastic material. According to the most preferred embodiment, said first thermoplastic material is polyvinylchloride, and said second thermoplastic material is polyethylene or polypropylene or polyethylene terephthalate. Said single layer is preferably of a uniform or practically uniform composition and/or has been obtained by means of a single extruder.

Preferably, said intermediate layer has an average thickness of 20 micrometer to 200 micrometer and/or has an average thickness lower than the thickness of said decorative top layer, preferably an average thickness between 5 and 85%, or between 10 and 25%, of the thickness or average thickness of said decorative top layer.

Preferably said extruded board material is foamed and the material of intermediate layer bridges or fills open cells available at said outermost surface.

Preferably, said extruded board material is foamed and substantially comprises closed cells. In such case, open cells may still be available but to a lower extent than the closed cells. In particular such open cells may be available at the surface of an outermost layer of said extruded substrate material. Also the presence of closed cells directly adjacent to the surface of said outermost layer of said extruded substrate material may profit from the advantages of the intermediate layer, for example the bridging leading to a lower risk of collapse of such cells or portions.

It is noted that any closed cells within said extruded board material may be filled with air, or another gaseous substance, such as CO₂, for example in case said outermost layer is foamed by means of injecting CO2 in the extruder.

With a closed cell or hollow portion being directly adjacent to a surface, preferably cells or hollow portions are envisaged, wherein the shortest distance between the center of such cell or portion and said surface is less than the largest dimension of said cell or portion.

Preferably, said extruded board material, or at least said outermost layer, is filled with hollow filler materials, wherein said hollow filler materials are selected from the list consisting of glass beads, expanded polystyrene, pumicite and vermiculite. The inventor has found that the use of mineral hollow fillers, such as glass beads, pumicite and vermiculite, are particularly advantageous for the strength of any coupling parts that are provided in the material of the substrate, more particularly are provided at least partially in said outermost layer, whether or not the intermediate layer of the first independent aspect has been applied. Therefore, in accordance with a particular independent aspect, the present invention is a decorative panel, preferably a decorative floor panel, wherein said decorative panel is rectangular, i.e. square or oblong, and comprises at least a substrate and a decorative top layer, characterized in that said substrate comprises one or more layers of thermoplastic material filled with at least glass beads, alternatively at least with pumicite and/or vermiculite, and wherein said panel at at least two opposite edges comprises coupling means allowing that two of such panels at the respective edges can be coupled together, wherein, in a coupled condition, a locking is obtained in a direction perpendicular to the plane of coupled panels, and in a direction perpendicular to the coupled edges and in the plane of coupled panels, wherein said coupling means are at least partially, for example at least for 70 percent of their circumference, provided in said one or more layers of thermoplastic material which are filled with at least glass beads, alternatively at least with pumicite and/or vermiculite. Preferably at least one pair of horizontally active locking surfaces and/or one pair of vertically active locking surfaces are formed in said one or more layers, as will further be elucidated by means of the attached drawings and their detailed description. Preferably, said one or more layers of thermoplastic material are foamed.

Preferably, said panel has a total density being between 0.8 and 1.25 times the density of the thermoplastic material applied in said extruded board material. The use of hollow portions formed by hollow filler materials and/or by foaming may herein account for a density reduction. The use of non-hollow filler materials, such as chalk or other mineral fillers, may lead to an economization of thermoplastic material, but may add to the density of the thermoplastic material, however due to the foaming and/or content of hollow filler materials, the density can be kept below 1.25 times the density of the thermoplastic material.

It is clear that said extruded board material may further comprise filler materials having a density higher than the density of the thermoplastic material applied in said extruded board material, such as mineral fillers, for example chalk or talcum.

Preferably, said foaming and/or filling with hollow filling materials brings about a density reduction of the extruded substrate material of at least 20% as compared to an unfoamed variant of such extruded substrate material that is free from hollow filler materials.

Preferably the decorative panel of the invention at at least two opposite edges comprises coupling parts or coupling means allowing to couple two such panels at the respective edges, such that in a coupled condition a locking is obtained between said edges in a direction perpendicular to the plane of coupled panels, and in a direction perpendicular to the coupled edges and in the plane of the coupled edges. Preferably such coupling parts are substantially formed as a tongue and groove, provided with locking parts preventing the drifting apart of the tongue and the groove in said direction perpendicular to the coupled edges. An example of such coupling parts is further illustrated in the detailed description with reference to the attached figures, wherein the locking parts comprise the there mentioned horizontally active locking surfaces.

Preferably the decorative panel of the invention comprises a substrate on the basis of an extruded board material, wherein said extruded board material forms at least half of the thickness of said decorative panel. As stated before, said substrate may be a single layered extruded board material that is foamed and/or filled with hollow filler materials such as glass beads. Such single layered extruded board material is preferably obtained through the use of a single extruder and/or has a uniform or substantially uniform composition, especially in its thickness direction, for example with the exception of one or both outermost surfaces. One or both outermost surfaces may be slightly differently foamed or filled due to boundary effects.

Preferably said decorative panel has a thickness of 4 to 9 mm.

Said decorative panel may comprise an additional layer or backing layer, for example of a foamed material, such as XPE (crosslinked polyethylene). Preferably such backing layer is glued to the bottom of said extruded board material, or to the bottom of said substrate.

With the same aim as in said first aspect, the present invention in accordance with its second independent aspect is a method for manufacturing a decorative panel, with as a characteristic that said method comprises at least the following steps:
- the step of extruding a board material, for example by means of at least one extruder, wherein said board material comprises one or more layers of thermoplastic material and wherein the outermost layer of said extruded board material is foamed and/or filled with hollow filler materials;
- the step of providing an intermediate layer on said outermost layer;
- the step of providing a decorative top layer on said intermediate layer.

The method of the second aspect is ideally suited to manufacture the decorative panels of the first aspect and the preferred embodiments thereof.

It is noted that in said step of extruding said board material, at least one extruder preferably feeds a die having a slot nozzle, wherein said slot nozzle preferably has an opening configured to produce said extruded board material, i.e. preferably at least with a height and width corresponding, or about corresponding, to the thickness and the width of said extruded board material.

Preferably said step of extruding is effected by means of at least one extruder and comprises injecting a gaseous substance, e.g. CO₂ or a pentane, into an extruder. According to an alternative, a foaming agent may be comprised in the material to be extruded, such as natrium bicarbonate or azodicarbonamide.

Preferably the intermediate layer is as mentioned in the first aspect and/or its preferred embodiments. For example, the intermediate layer is preferably formed as a prefabricated single or multilayered sheet material, wherein, preferably, said sheet material comprises at least one layer, for example the single layer as the case may be, of a thermoplastic material that is different from the thermoplastic material of the extruded substrate material and/or the material contained in the decorative top layer.

According to a variant, the intermediate layer is provided inline with said step of extruding said board material. For example, the intermediate layer may be extruded as well, through a separate nozzle, or through a same nozzle as said extruded board material.

The one or more thermoplastic materials of the intermediate layer may be chosen in accordance with the possibilities and specific examples listed in connection to the first aspect of the invention.

For the step of providing said decorative top layer, a decorative print and/or a wear layer as the case may be, the techniques mentioned in the first aspect may be used. For example, the step of providing said decorative top layer may comprise the step of providing a decorative print by liquidly applying one or more primer layers, and subsequently providing inks on said one or more primer layers, wherein said intermediate layer is preferably present intermediate the surface of said outermost layer and said liquidly applied primer layers. Preferably, said intermediate layer is directly adjacent to the lowermost of said liquidly applied primer layers. Alternatively, instead of using liquidly applied primer layers, the step of providing said decorative top layer may comprise the step of providing a decorative print by applying a printed thermoplastic foil, or by applying a thermoplastic foil and subsequently providing inks on said thermoplastic foil, wherein said intermediate layer is preferably present intermediate the surface of said outermost layer and said thermoplastic foil. Preferably, the step of applying said decorative top layer further comprises the step of providing a wear layer on top of said decorative print. For example, the wear layer may be provided at least by casting or otherwise liquidly applying a thermoplastic material, or at least by applying a transparent thermoplastic foil.

It is clear that the present invention, in an independent manner, also relates to multilayered sheet materials as mentioned in connection to the first aspect, which are preferably suitable for being applied as an intermediate layer in the decorative panel of the first aspect and/or the method of the second aspect.

With the intention of better showing the characteristics according to the invention, in the following, as an example without limitative character, some embodiments are described, with reference to the accompanying drawings, wherein:
figure 1 shows a decorative panel in accordance with the invention;
figure 2 and 3 at a larger scale illustrates a cross-section in accordance with the lines II-II and III-III respectively, as indicated in figure 1;
figure 4 at a larger scale gives a view on the area indicated with F4 in figure 2;
figures 5 in a same view illustrates a variant; and
figure 6 at a larger scale, and for a variant, gives view on the area indicated with F6 in figure 5.

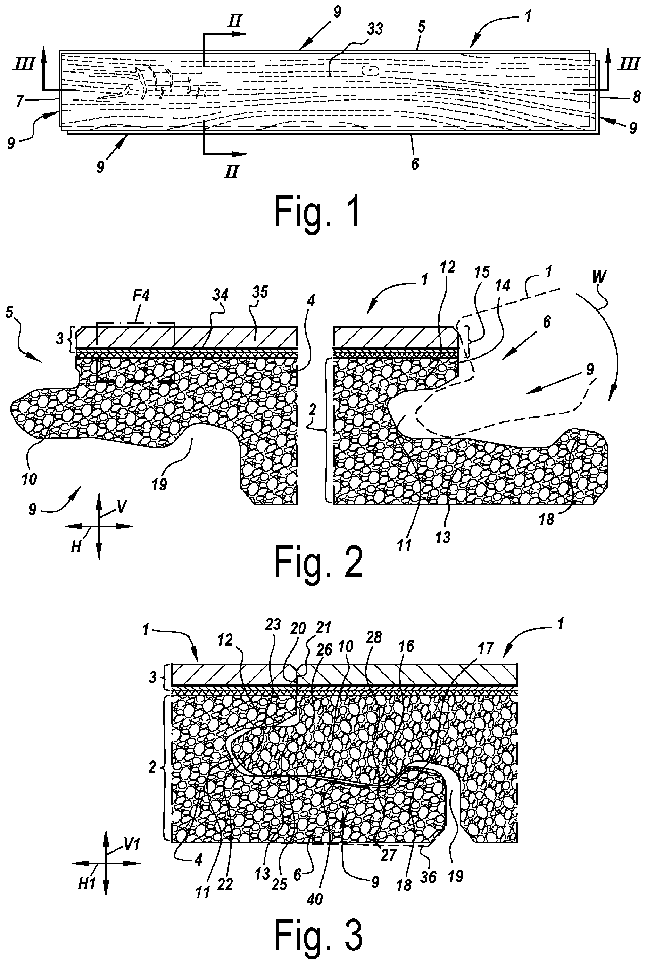

Figure 1 represents a rectangular floor panel 1. In this case the floor panel 1 is rectangular and oblong.

Figure 2 clearly shows that the floor panel 1 comprises a substrate 2 and a provided thereon decorative top layer 3.

The substrate 2 comprises foamed PVC 4, in this case a single layered extruded foamed PVC having a plasticizer content of less than 5phr, and is provided on at least two opposite edges 5-6-7-8, and in this case on the pair of long opposite edges 5-6 as well as on the pair of short opposite edges 7-8, with mechanical coupling means 9.

Figure 2 clearly shows that the coupling means 9 on the long opposite edges 5-6 substantially are realized as a tongue 10 and a groove 11 with an upper lip 12 and lower lip 13. In this case, the aforementioned lower lip 13 extends in horizontal direction to beyond the distal end 14 of the upper lip 12. The represented coupling means 9 allow at least a coupling by means of a turning movement W along the respective edges 5-6.

Figure 3 shows that in the coupled condition a locking is obtained in horizontal direction H1 perpendicular to the coupled edges 5-6 and in the plane of the panels 1, as well as in vertical direction V1 perpendicular to the plane of the coupled panels 1. The coupling means 9 consist of milled profiles, which for at least 70 percent of their circumference are provided in the substrate 2 and, in this case out of the PVC polymer 4. In this case, the coupling means 9 are provided practically entirely in the extruded and foamed PVC material of the substrate 2, with the exception of the portion 15 of their circumference being formed at least on the decorative top layer 3.

Figure 3 represents that at least one pair of horizontally active locking surfaces 16-17 of the coupling means 9 is realized in the PVC material 4 of the substrate 2. Herein, this relates to a first pair of locking surfaces 16-17 formed on a protruding locking portion 18 of the lower lip 13 and a cooperating therewith locking groove 19 on the lower side of the tongue 10. A second pair of horizontally active locking surfaces 20-21 is formed in the example at least on the decorative top layer 3, or the aforementioned portion 15 of the circumference of the coupling means 9. Several pairs of the vertically active locking surfaces 22-23-25-26 are formed of the extruded PVC material 4 of the substrate 2. Herein, this relates at least to a first pair of vertically active locking surfaces 22-23 on the upper side of the tongue 10 and the lower side of the upper lip 12 of the groove 11, and at least a second pair of vertically active locking surfaces 25-26 on the lower side of the tongue 10 and the upper side of lower lip 13 of the groove 11. In the example of figure 3, the second pair of vertically active locking surfaces 25-26 is formed such that they extend at least horizontally at a position vertically underneath the aforementioned upper lip 12. In this case, also a third pair of vertically active locking surfaces 27-28 is formed in the proximity of the aforementioned first horizontally active locking surfaces 16-17.

The aforementioned decorative top layer 3 comprises a printed motif 33 and represents a single wooden plank. The printed motif 33 is provided on a thermoplastic foil 34, namely in this case, an unplasticized PVC foil. The floor panel 1 further also comprises a translucent or transparent wear layer 35, which is provided above the aforementioned decoration or printed motif 33.

It is noted that, according to a not represented embodiment, a floor panel 1 according to the invention may show an additional layer on the lower side of the substrate 2. Herein, this preferably relates to a foam layer, for example, of cross-linked or crosslinked polyethylene (XPE), which is fixed to the lower side of the substrate 2 by means of glue.

Further, it is noted that in the coupled condition of figure 3 a tension force can be obtained between the respective floor panels 1, more particularly at the location of the second pair of horizontally active locking surfaces 20-21, namely between the respective decorative top layers 3 on the upper edges of the coupled floor panels 1. In dashed line 36 in figure 3 is represented that such tension force can be obtained, for example, in that the lower lip 13 in the coupled condition is spring-deflected and in the coupled condition pushes against the tongue 10. Such pretension is known as such, for example, from WO 97/47834.

According to a not-represented variant of figure 3, instead of a pretension, a so-called play may be present in the coupled condition. In such case, in a coupled condition, some space may be available between the first pair of horizontally active locking surfaces 16-17, while a second pair of horizontally active locking surfaces is in contact at a position above the vertically active contact surfaces 22-23 between the upper side of the tongue 10 and the lower side of the upper lip 12 of the groove 11. Such space preferably extends over a horizontal distance of 0,2 mm or smaller.

At the opposite short edges 7-8 of the floor panel 1 in the example of figures 1 to 3 the same coupling means 9 are applied as at the long opposite edges 5-6. This is however not necessarily the case, and other coupling means may for example be applied at the opposite short edges 7-8, such as coupling means allowing to obtain a coupled condition by means of a downward motion of one such panel edge 7 to another such panel edge 8.

It is clear that, when instead of being foamed, or in combination with being foamed, the substrate 2 of figures 1 to 3 would be filled with hollow filler materials, such as glass beads, it would form an illustration of the particular independent aspect mentioned in the introduction.

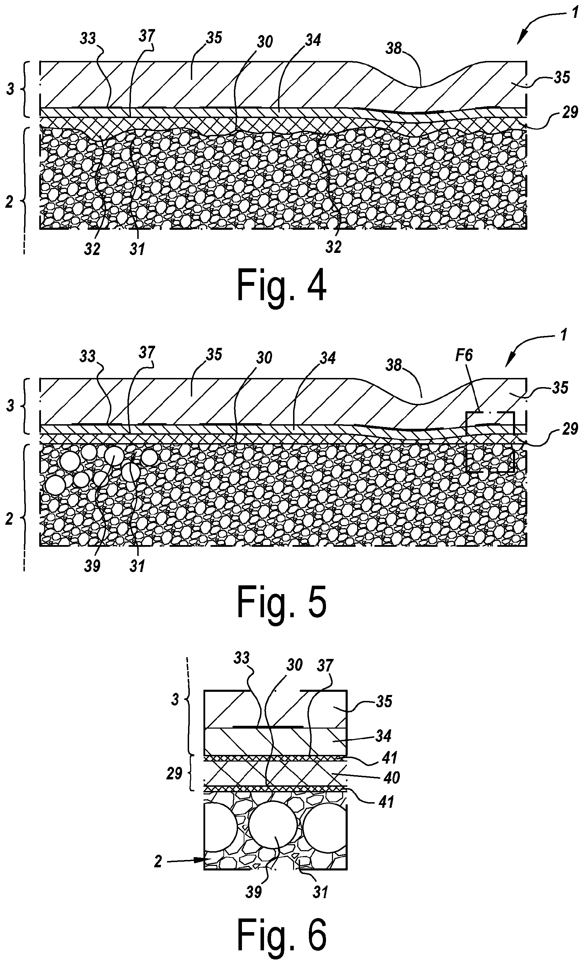

Figure 4 illustrates that an intermediate layer 29 is present intermediate the surface 30 of an outermost layer 31 of the substrate 2 and said decorative print 33. In this case, the intermediate layer 29 is directly adjacent the surface 30 of said outermost layer 31 and directly adjacent to said thermoplastic foil 34 having the decorative print 33 applied thereon.

The intermediate layer 29 is based on a thermoplastic material different from the material of the thermoplastic foil 34 that carries the decorative print 33. In this case the thermoplastic material of the intermediate layer 29 is polyethylene. In the example of figure 4, the intermediate layer 29 fills open cells 32 available at the outer surface 30 of said outermost layer 31. It is clear that the open cells 32 form excavations in the outer surface 30, that are now filled by means of the intermediate layer 29.

The surface 37 of said intermediate layer 29 that faces away from said outermost layer 31 extends over said open cells 32 in a planar manner. The surface 37 of said intermediate layer 29 is substantially level with the exceptions of embossments 38 provided in said decorative layer 3 that extend into said intermediate layer 29.

Figure 5 illustrates an alternative where hollow portions 39 are available immediately adjacent said outermost layer 31.

Figure 6 shows an example where the intermediate layer is a multilayered prefabricated sheet, more particularly comprising a central layer 40, and two outermost layers 41, wherein the outermost layers 41 are based on a different thermoplastic material than said central layer 40.

The present invention further relates to embodiments as defined by the below numbered paragraphs.
1. Decorative panel comprising at least a substrate 2 and a decorative top layer 3, wherein said substrate 2 is or comprises an extruded board material comprising one or more layers of thermoplastic material and wherein said decorative top layer 3 at least comprises a decorative print 33, characterized in that an outermost layer 31 of said extruded board material is foamed and/or filled with hollow filler materials, and in that an intermediate layer 29 is present intermediate the surface 30 of said outermost layer 31 and said decorative print.
2. Decorative panel according to numbered paragraph 1, characterized in that said decorative print 33 comprises inks provided on a thermoplastic foil 34, wherein said intermediate layer 29 is present intermediate the surface 30 of said outermost layer 31 and said thermoplastic foil 34.
3. Decorative panel according to numbered paragraph 2, characterized in that said intermediate layer 29 is directly adjacent to said thermoplastic foil 34, or in that said intermediate layer 29 is separated from said thermoplastic foil 34 exclusively by means of a glue layer.
4. Decorative panel according to numbered paragraph 2 or 3, characterized in that said intermediate layer 29 is based on a thermoplastic material different from the material of said thermoplastic foil 34.
5. Decorative panel according to numbered paragraph 1, characterized in that said decorative print 33 comprises inks provided on one or more liquidly applied primer layers, wherein said intermediate layer 29 is present intermediate the surface 30 of said outermost layer 31 and said liquidly applied primer layers.
6. Decorative panel according to numbered paragraph 5, characterized in that said intermediate layer 29 is directly adjacent to the lowermost of said liquidly applied primer layers.
7. Decorative panel according to any of the preceding numbered paragraphs, characterized in that said intermediate layer 29 is directly adjacent to said surface 30 of said outermost layer 31, or in that said intermediate layer 29 is separated from said surface 30 of said outermost layer 31 exclusively by means of a glue layer.
8. Decorative panel according to any of the preceding numbered paragraphs, characterized in that said intermediate layer 29 is a thermoplastic foil.
9. Decorative panel according to numbered paragraph 8, characterized in that said intermediate layer 29 is a polyethylene, polyethylene terephthalate, copolymer of PET or a glycol modified polyethylene terephthalate film.
10. Decorative panel according to numbered paragraph !, characterized in that said intermediate layer 29 is a polypropylene film or a film based on a copolymer of PP and PE.
11. Decorative panel according to any of the preceding numbered paragraphs, characterized in that said intermediate layer 29 is based on a thermoplastic material different from the thermoplastic material of said substrate 2.
12. Decorative panel according to any of the preceding numbered paragraphs, characterized in that said extruded board material consists of a single layer of a first thermoplastic material and said decorative top layer 3 comprises a decorative print 33 provided on a film 34 of said first thermoplastic material, wherein said intermediate layer 29 comprises a second thermoplastic material.
13. Decorative panel according to numbered paragraph 2, characterized in that said first thermoplastic material is polyvinylchloride, and said second thermoplastic material is polyethylene or polypropylene or polyethylene terephthalate.
14. Decorative panel according to any of the preceding numbered paragraphs, characterized in that said extruded board material is foamed and the material of said intermediate layer 29 bridges or fills open cells 32 available at said outermost surface.
15. Decorative panel according to any of the preceding numbered paragraphs, characterized in that said extruded board material is foamed and substantially comprises closed cells.
16. Decorative panel according to any of the preceding numbered paragraphs, characterized in that said extruded board material is filled with hollow filler materials, wherein said hollow filler materials are selected from the list consisting of glass beads, expanded polystyrene, pumicite and vermiculite.
17. Decorative panel according to any of the preceding numbered paragraphs, characterized in that said outermost surface 30 comprises excavations, wherein the surface of said intermediate layer 29 that faces away from said outermost surface 30 is more planar, or is preferably substantially level.
18. Decorative panel according to any of the preceding numbered paragraphs, characterized in that said panel 1 has a total density being between 0.8 and 1.25 times the density of the thermoplastic material applied in said extruded board material.
19. Decorative panel according to any of the preceding numbered paragraphs, characterized in that said extruded board material further comprises filler materials having a density higher than the density of the thermoplastic material applied in said extruded board material.
20. Decorative panel according to any of the preceding numbered paragraphs, characterized in that said foaming and/or filling brings about a density reduction of at least 20%.
21. Method for manufacturing a decorative panel, characterized in that said method comprises at least the following steps:
   - the step of extruding a board material comprising one or more layers of thermoplastic material and wherein the outermost layer 31 of said extruded board material is foamed or filled with hollow filler materials;
   - the step of providing an intermediate layer 29 on said outermost layer 31;
   - the step of providing a decorative top layer 3 on said intermediate layer 29.
22. Method according to numbered paragraphs 21, wherein said step of extruding is effected by means of at least one extruder and comprises injecting CO₂ into said at least one extruder.
23. Method according to numbered paragraphs 21 or 22, characterized in that said panels show the characteristics of any of numbered paragraphs 1 to 20.
24. Decorative panel, wherein said decorative panel 1 is rectangular, i.e. square or oblong, and comprises at least a substrate 2 and a decorative top layer 3, wherein said panel 1 at at least two opposite edges 5-6 comprises coupling means 9 allowing that two of such panels 1 at the respective edges 5-6 can be coupled together, wherein, in a coupled condition, a locking is obtained in a direction V1 perpendicular to the plane of coupled panels 1, and in a direction perpendicular H1 to the coupled edges 5-6 and in the plane of coupled panels 1, characterized in that said substrate 2 comprises one or more layers of thermoplastic material filled with at least glass beads. and wherein said coupling means 9 are at least partially provided in said one or more layers of thermoplastic material.

The present invention is not limited to the preferred embodiments described here above, but such decorative panels and methods may be realized according to several variants without leaving the scope of the invention.

## Claims

1. Decorative panel comprising at least a substrate (2) and a decorative top layer (3), wherein said substrate (2) is or comprises an extruded board material comprising one or more layers of thermoplastic material and wherein said decorative top layer (3) at least comprises a decorative print (33), **characterized in that** an outermost layer (31) of said extruded board material is foamed and/or filled with hollow filler materials, and **in that** an intermediate layer (29) is present intermediate the surface (30) of said outermost layer (31) and said decorative print (33).

2. Decorative panel according to claim 1, **characterized in that** said decorative print (33) comprises inks provided on a thermoplastic foil (34), wherein said intermediate layer (29) is present intermediate the surface (30) of said outermost layer (31) and said thermoplastic foil (34).

3. Decorative panel according to claim 2, **characterized in that** said intermediate layer (29) is directly adjacent to said thermoplastic foil (34), or **in that** said intermediate layer (29) is separated from said thermoplastic foil (34) exclusively by means of a glue layer.

4. Decorative panel according to claim 2 or 3, **characterized in that** said intermediate layer (29) is based on a thermoplastic material different from the material of said thermoplastic foil (34).

5. Decorative panel according to any of the preceding claims, **characterized in that** said intermediate layer (29) is directly adjacent to said surface (30) of said outermost layer (31), or **in that** said intermediate layer (29) is separated from said surface (30) of said outermost layer (31) exclusively by means of a glue layer.

6. Decorative panel according to any of the preceding claims, **characterized in that** said intermediate layer (29) is a a polyethylene, polyethylene terephthalate, copolymer of PET or a glycol modified polyethylene terephthalate film.

7. Decorative panel according to any of the preceding claims, **characterized in that** said intermediate layer (29) is based on a thermoplastic material different from the thermoplastic material of said substrate (2).

8. Decorative panel according to any of the preceding claims, **characterized in that** said extruded board material consists of a single layer of a first thermoplastic material and said decorative top layer (3) comprises a decorative print (33) provided on a film (34) of said first thermoplastic material, wherein said intermediate layer (29) comprises a second thermoplastic material.

9. Decorative panel according to claim 8, **characterized in that** said first thermoplastic material is polyvinylchloride, and said second thermoplastic material is polyethylene or polypropylene or polyethylene terephthalate.

10. Decorative panel according to any of the preceding claims, **characterized in that** said extruded board material is foamed and the material of said intermediate layer (29) bridges or fills open cells (32) available at said outermost surface.

11. Decorative panel according to any of the preceding claims, **characterized in that** said extruded board material is foamed and substantially comprises closed cells.

12. Decorative panel according to any of the preceding claims, **characterized in that** said extruded board material is filled with hollow filler materials, wherein said hollow filler materials are selected from the list consisting of glass beads, expanded polystyrene, pumicite and vermiculite.

13. Decorative panel according to any of the preceding claims, **characterized in that** said outermost surface (30) comprises excavations, wherein the surface of said intermediate layer (29) that faces away from said outermost surface (30) is more planar, or is preferably substantially level.

14. Decorative panel according to any of the preceding claims, **characterized in that** said panel (1) has a total density being between 0.8 and 1.25 times the density of the thermoplastic material applied in said extruded board material.

15. Decorative panel according to any of the preceding claims, **characterized in that** said foaming and/or filling brings about a density reduction of at least 20%.
